# EUROPEAN PATENT SPECIFICATION

(11) **EP 0 483 927 B1**
(45) Date of publication and mention of the grant of the patent: **05.06.1996**
(21) Application number: 91202799.2
(22) Date of filing: 29.10.1991
(51) Int. Cl.: C01B 25/36, C01B 25/45, C01B 33/26, B01J 29/04

(54) **Crystalline aluminophosphates and related compounds**
Kristalline Aluminophosphate und verwandte Verbindungen
Aluminophosphates cristallins et composés apparentés

(30) Priority: 02.11.1990 GB 9023847
(43) Date of publication of application: 06.05.1992
(73) Proprietor: SHELL INTERNATIONALE RESEARCH MAATSCHAPPIJ B.V., NL-2596 HR Den Haag (NL)
(72) Inventor: Clark, David Michael, NL-1031 CM Amsterdam (NL); Kraushaar-Czarnetzki, Bettina, NL-1031 CM Amsterdam (NL); Dogterom, Ronald Jan, NL-1031 CM Amsterdam (NL)

(56) References cited:
- EP-A- 0 146 389
- EP-A- 0 344 837
- WO-A-89/08608

## Description

The present invention relates to a process for preparing aluminophosphate compositions.

Crystalline aluminophosphate compositions are well known materials which find a promising reception in industry as new generations of molecular sieves, catalysts carriers as well as catalysts. For instance, in United States patent specification No. 4,310,440 the preparation of various crystalline aluminophosphates is described from reaction mixtures containing inter alia organic structure directing or templating agents including tetrapropylammonium hydroxide, quinuclidine, t-butylamine and ethylenediamine.

Classes of these materials comprise compositions crystallised in the AlPO₄, SAPO₄ (siliconaluminophosphate), MeAPO₄ (metalloaluminophosphate) and ElAPO₄ (non-metal substituted aluminophosphate) families.

EP-A-0344,837 discloses a process for the preparation of crystalline aluminophosphates starting form a solution or a gel wherein the various components are present in molar ratios of: diamine: Al₂O₃ = 0.1-3; X:Al₂O₃ = 0-2, P₂O₅:Al₂O₃ = 0.3-1.3 and H₂O:Al₂O₃ = 40-500; X being an element which can be substituted for Al or P. The aluminophosphates thus prepared have a three dimensional zeolite type crystal lattice.

It has now been found that crystalline aluminophosphates and related compounds (e.g. of the AlPO₄-, SAPO₄- and MeAPO₄-type) of a layered structure can be prepared by means of a similar process as disclosed in EP-A-0344,837, however, using a higher ratio of P₂O₅:Al₂O₃.

The present invention thus relates to a process for preparing crystalline aluminophosphates from a forming solution or gel comprising a mixture of a source of aluminium; a source of phosphorus; optionally a source of at least one metal oxide, MeO, wherein Me stands for a divalent metal moiety; and a source based on a diamine of the general formula

R₂R₃N-R₁―NR₄R₅

wherein R₁ represents a C₈-C₁₄ carbon chain which may contain one or more inert substitutents and each of R₂, R₃, R₄ and R₅ represents a hydrogen atom or an alkyl group which may contain one or more inert substituents, which mixture is kept at elevated temperature for a period of time sufficient to produce a crystalline aluminophosphate, followed by separating off the crystalline product obtained and drying, in which solution or gel the various components are initially present in the following molar ratios:
R:Al₂O₃ = 0.1 -3
MeO:Al₂O₃ = 0 - 2
P₂O₅:Al₂O₃ = ≧ 1.5 and
H₂O:Al₂O₃ = 40 - 500.

The aluminophosphates prepared according to the process of the present invention appear to possess a layered structure wherein the interlayer distances and the unit cell dimensions vary to some extent depending on the chain length of the diamine applied.

Particularly preferred organic diamine compounds used in the process of the present invention comprise those wherein R₁ represents a C₈-C₁₂ carbon chain, in particular a C₈ carbon chain, and each of R₂, R₃, R₄ and R₅ represents a hydrogen atom or a lower alkyl group. In particular, preference is given to 1,8-diaminooctane. It should be noted that the nitrogen atoms of the appropriate diaminoalkane each may carry a further hydrogen atom or lower alkyl group which necessitates the presence of anion(s) to cause electroneutrality.

It should be understood that within the present specification a lower alkyl group is an alkyl group comprising 1 to 4 carbon atoms.

As divalent metal moiety Me can suitably be used one or more of beryllium, magnesium, manganese, iron, cobalt, zinc, nickel and chromium. Typically, said metal will be one or more of magnesium, manganese, iron, cobalt, zinc and nickel and preferably one or more of magnesium, manganese, cobalt and zinc. The use of the metal oxide MeO in the process according to the present invention is optional. In the event that MeO:Al₂O₃ > 0 it will be appreciated that the as-synthesised form of the resulting crystalline aluminophosphates also contains an appropriate charge-balancing cation such as a proton or a protonic form of R as described hereinbefore.

It is well known to those skilled in the art that as-synthesised forms of crystalline aluminophosphates can contain traces of counterions originating from precursors of P₂O₅, Al₂O₃, SiO₂ or MeO and/or traces of impurities.

SCS-22 is an example of a crystalline aluminophosphate prepared according to a process of the present invention using 1,8-diaminooctane as template/structure directing agent. The characteristic lines of its X-ray diffraction pattern are given in Table I. When use is made of 1,10-diaminodecane an SCS-22 type compound having the characteristic lines in its X-ray diffraction pattern as listed in Table II is obtained and when use is made of 1,12-diaminododecane an SCS-22 type compound having the characteristic lines of its X-ray diffraction pattern as listed in Table III is obtained.

Crystalline aluminophosphates which are substantially in the calcined, R-free form can be obtained by drying the as-synthesised materials and subjecting the dried materials to an appropriate calcination to remove the template/structure directing agent substantially or totally.

In a preferred embodiment of the process according to the present invention the various components are used in the following molar ratios :
R:Al₂O₃ = 0.15 - 2
MeO:Al₂O₃ = 0 - 2
P₂O₅:Al₂O₃ = 1.5 - 2.5 and
H₂O:Al₂O₃ = 45 - 350.

Crystalline aluminophosphates prepared according to the process of the present invention have in the as-synthesised form an X-ray diffraction pattern containing at least the lines as given in Table I, II or III.

The process according to the present invention is suitably carried whilst keeping the temperature below 200 °C, in particular at a temperature in the range of from 100 °C to 200 °C, most preferably in the range between 110 °C and 180 °C. The use of aqueous forming solutions or gels is preferred.

For preparing the forming solution or gel, any source or promoter form based on a diamine as defined hereinbefore can be used as template and/or structure directing agent, such as a quaternary ammonium compound of such diamine, which source or promoter should be such that it can be converted into the appropriate diamine.

The process according to the present invention can be carried out at autogenous pressure as well as at an elevated pressure. Normally, the crystalline aluminophosphates and related compounds will be produced when the forming solution or gel has been kept under the appropriate conditions for a period of time allowing the proper structure to be formed.

Preferably, the process according to the present invention is carried out for a period of time ranging between 6 hours and 144 hours, in particular between 24 and 96 hours.

Examples of suitable aluminium sources comprise aluminium oxides, such as γ and η-alumina, hydroxides as well as mixtures thereof, such as gibbsite, boehmite and pseudo-boehmite or aluminium alkoxides, such as aluminium triisopropoxide.

Suitable phosphorus sources comprise phosphorus acids and derivatives thereof such as esters, phosphorus oxides, phosphates and phosphites, preferably phosphoric acids. Also mixtures of phosphorus sources can be applied.

Examples of suitable precursors of MeO comprise the appropriate chlorides, iodides, bromides, nitrates, sulphates and acetates.

It has been found that agitation, e.g. rotation, can be applied advantageously during crystallization to produce the desired crystalline aluminophosphates from the forming solution or gel.

It should be noted that the expression "dried" as referred to in this specification should be understood to mean removal of physically adsorbed water. Normally, such removal will be achieved by exposing the as-synthesised material to a temperature regime of about 120 °C for a period of time sufficient to substantially remove said water. Normally, such removal is achieved with a period of between 3 and 12 hours.

The crystalline aluminophosphates prepared according to the process of the process of the present invention can be suitably used as molecular sieves, as catalysts or as catalyst carriers in the operation of various catalytic processes.

If desired, one or more (catalytically) active species, in particular protons and/or precursors thereof and/or one or more metal(s) (compounds) of Group III and/or the Transition Metals and/or Rare Earth Metals and/or precursors thereof, can be incorporated into the crystalline aluminophosphates.

They can be incorporated by well-known techniques such as, for example, impregnation and ion-exchange.

The invention will now be illustrated by the following Examples.

### Example I

A crystalline SAPO, referred to as SCS-22, was prepared by mixing 10.2 grammes of aluminium triisopropoxide, 1.6 grammes of silica-sol (Ludox AS), 11.5 grammes of 85% H₃PO₄, 7.2 grammes of C8DN (1,8 - diaminooctane) and 66.6 grammes of water giving a reaction gel mixture (on a molar basis) of 0.2 SiO₂:0.5 Al₂O₃:1 P₂O₅:1 C8DN:80 H₂O.

This mixture was kept at 140 °C for a period of 72 hours until a crystalline compound was obtained. After synthesis, the crystalline compound produced was separated from the reaction mixture by filtration, water washed and dried at 120 °C.

The crystalline compound obtained has the following chemical composition, wherein R represents C8DN:
0.84 R (1 P₂O₅) (0.88 Al₂O₃) (0.11 SiO₂) (0.3 H₂O).

The characterising lines of its X-ray diffraction pattern are found within the ranges given in Table I below:

**Table I**

| d(A) | Intensity |
|---|---|
| 16.4 +/- 0.2 | vs |
| 12.4 +/- 0.2 | vw |
| 8.2 +/- 0.1 | vw-wm |
| 4.6 +/- 0.1 | vw-w |
| 4.27 +/- 0.05 | vw-w |
| 4.12 +/- 0.05 | vw-w |
| 4.09 +/- 0.05 | vw-w |
| 4.01 +/- 0.05 | vw-w |
| 3.96 +/- 0.05 | vw-w |
| 3.58 +/- 0.05 | vw-w |
| b 3.43 +/- 0.03 | vw-w |
| 3.26 +/- 0.03 | vw-w |
| b 3.09 +/- 0.03 | vw-w |
| 2.75 +/- 0.03 | vw |
| 2.72 +/- 0.03 | vw |

### Example II

The experiment described in the previous Example was repeated but using a smaller amount of silica-sol; so as to give a reaction gel mixture (on a molar basis) of 0.1 SiO₂:0.5 Al₂O₃:1 P₂O₅:1 C8DN:80 H₂O.

This mixture was kept at 140 °C for 72 hours until a crystalline compound was obtained. After synthesis, the crystalline compound was separated from the reaction mixture by filtration, water washed and dried at 120 °C.

The crystalline compound obtained has the following chemical composition, wherein R represents C8DN:
0.60 R (1 P₂O₅) (0.92 Al₂O₃) ( 0.08 SiO₂) (0.3 H₂O) and has an X-ray diffraction pattern consistent with that given in Table I.

### Example III

A crystalline SAPO, referred to as SCS-22, was prepared by mixing 51.1 grammes of aluminium triisopropoxide, 11.7 grammes of silica-sol (Ludox AS), 57.6 grammes of 85% H₃PO₄, 36.1 grammes of C8DN and 330.7 grammes of water giving a reaction gel mixture (on a molar basis) of 0.3 SiO₂:0.5 Al₂O₃:1 P₂O₅:1 C8DN:80 H₂O.

This mixture was kept at 140 °C for a period of 7 hours until a crystalline compound was obtained.

After synthesis, the crystalline compound produced was separated from the reaction mixture by filtration, water washed, and dried at 120 °C. Its X-ray diffraction pattern is consistent with that given in Table I.

### Example IV

A crystalline CoAPSO was prepared in an experiment which was carried out in a substantially analogous manner as described in Example III, by mixing 20.4 grammes of aluminium triisopropoxide, 4.7 grammes of silica-sol (Ludox AS), 23.1 grammes of 85% H₃PO₄, 14.4 grammes of C8DN, 130 grammes of H₂O and additionally 7.5 grammes of Co(CH₃COO)₂.4H₂O giving a reaction gel mixture (on a molar basis) of 0.3 SiO₂:0.3 CoO:0.5 Al₂O₃:1 P₂O₅:1 C8DN:80 H₂O.

This mixture was kept at 110 °C for a period of 72 hours under gentle rotation until a crystalline compound was obtained. After synthesis, the crystalline compound produced was separated from the reaction mixture by filtration, water washed and dried at 120 °C.

The crystalline compound has the following chemical composition wherein R represents C8DN:
0.54 R (0.44 CoO) (1 P₂O₅) (0.69 Al₂O₃) (0.34 SiO₂) (0.3 H₂O) and has an X-ray diffraction pattern consistent with that given in Table I.

### Example V

The experiment described in the previous Example was repeated at a temperature of 140 °C and using 3.7 grammes of pseudo-boehmite as the aluminium source.

After working up, an SCS-22 type CoAPSO was obtained having the following chemical composition, wherein R represents C8DN:
0.66 R (0.25 CoO) (1 P₂O₅) (0.75 Al₂O₃) (0.18 SiO₂) (0.22 H₂O) and an X-ray diffraction pattern consistent with that given in Table I.

### Example VI

The experiment described in the previous Example was repeated but using aluminium triisopropoxide as the aluminium source, a synthesis temperature of 120 °C and an amount of cobalt (II) acetate tetrahydrate giving 0.2 mole of CoO per mole P₂O₅ in the starting reaction mixture.

After working up, an SCS-22 type CoAPSO was obtained having the following chemical composition, wherein R represents C8DN:
0.57 R (0.09 CoO) (1 P₂O₅) (0.61 Al₂O₃) (0.30 SiO₂) (0.25 H₂O) and an X-ray diffraction pattern consistent with that given in Table I.

### Example VII

The experiment described in the previous Example was repeated whilst stirring the reaction gel mixture for a period of 21.5 hours. After working up, a crystalline product was obtained having an X-ray pattern consistent with that given in Table I.

### Example VIII

The experiment as described in Example IV was repeated at a temperature of 120 °C for a period of 72 hours and using 1,10-diaminodecane (C10DN) as the template/structure directing agent.

The crystalline compound obtained has the following chemical composition, wherein R represents C10DN:
0.90 R (0.45 CoO) (1 P₂O₅) (0.64 Al₂O₃) (0.41 SiO₂) (0.3 H₂O) and has an X-ray diffraction pattern containing at least the lines given in Table II:

**Table II**

| d(A) | Intensity |
|---|---|
| 18.4 | vs |
| 9.2 | w |
| 4.59 | vw |
| 3.68 | vw |
| 3.06 | vw |

### Example IX

The experiment described in the previous Example was repeated but using 1,12-diaminododecane (C12DN) as template/structure directing agent.

The crystalline compound obtained has the following chemical composition, wherein R represents C12DN:
0.94 R (0.42 CoO) (1 P₂O₅) (0.64 Al₂O₃) (0.37 SiO₂) (0.3 H₂O) and has an X-ray diffraction pattern containing at least the lines given in Table III:

**Table III**

| d(A) | Intensity |
|---|---|
| 20.2 | vs |
| 18.7 | w |
| 5.04 | vw |
| 4.03 | vw |
| 3.35 | vw |

## Claims

1. A process for preparing crystalline aluminophosphates from a forming solution or gel comprising a mixture of a source of aluminium; a source of phosphorus; optionally a source of at least one metal oxide, MeO, wherein Me stands for a divalent metal moiety; and a source based on a diamine of the general formula
R₂R₃N-R₁―NR₄R₅
wherein R₁ represents a C₈-C₁₄ carbon chain which may contain one or more inert substitutents and each of R₂, R₃, R₄ and R₅ represents a hydrogen atom or an alkyl group which may contain one or more inert substituents, which mixture is kept at elevated temperature for a period of time sufficient to produce a crystalline aluminophosphate, followed by separating off the crystalline product obtained and drying, in which solution or gel the various components are initially present in the following molar ratios:
R:Al₂O₃ = 0.1 -3
MeO:Al₂O₃ = 0 - 2
P₂O₅:Al₂O₃ = ≧ 1.5 and
H₂O:Al₂O₃ = 40 - 500.

2. A process according to claim 1, wherein the various components in the forming solution or gel are initially present in the following molar ratios:
R:Al₂O₃ = 0.15 - 2
MeO:Al₂O₃ = 0 - 2
P₂O₅:Al₂O₃ = 1.5 - 2.5 and
H₂O:Al₂O₃ = 45 - 320.

3. A process according to claim 1 or 2, wherein use is made of an aluminium oxide, hydroxide and/or alkoxide as source of aluminium, in particular aluminium triisopropoxide.

4. A process according to one or more of claims 1-3, wherein use is made of phosphorus acids, phosphorus oxides, phosphates or phosphites as source of phosphorus.

5. A process according to one or more of claims 1-4, wherein use is made of a structure directing or template source as defined hereinbefore, wherein R₁ represents a C₈-C₁₂ carbon chain and each of R₂, R₃, R₄ and R₅ represents a hydrogen atom or a lower alkyl group, preferably use is made of 1,8-diaminooctane.

6. A process according to one or more of claims 1-5, wherein use is made of a precursor of MeO in the form of the appropriate chlorides, iodides, bromides, sulphates, nitrates or acetates.

7. A process according to one or more of claims 1-6, wherein the temperature is kept below 200 °C, in particular in the range between 100 and 200 °C, and preferably in the range between 110 and 180 °C.

8. A process according to one or more of claims 1-7, wherein the forming solution or gel is kept for a period of time ranging between 6 and 144 hours, in particular between 24 and 96 hours, under crystal-forming conditions.

9. A process according to one or more of claims 1-8, wherein the crystalline product obtained is calcined.

## Patentansprüche

1. Verfahren zur Herstellung von kristallinen Alumophosphaten aus einer Ausgangslösung oder einem Ausgangsgel, enthaltend ein Gemisch aus einer Aluminiumquelle, einer Phosphorquelle, gegebenenfalls einer Quelle mindestens eines Metalloxids MeO, worin Me für eine zweiwertige Metalleinheit steht, und einer auf einem Diamin der allgemeinen Formel
R₂R₃N-R₁―NR₄R₅
worin R₁ eine gegebenenfalls einen oder mehrere inerte Substituenten tragende C₈-C₁₄-Kohlenstoffkette und R₂, R₃, R₄ und R₅ jeweils ein Wasserstoffatom oder eine gegebenenfalls einen oder mehrere inerte Substituenten tragende Alkylgruppe bedeuten, beruhenden Quelle, wobei man dieses Gemisch über einen zur Herstellung eines kristallinen Alumophosphats ausreichenden Zeitraum bei erhöhter Temperatur hält, anschließend das erhaltene kristalline Produkt abtrennt und trocknet, wobei man die verschiedenen Komponenten der Lösung oder des Gels in folgenden Molverhältnissen vorlegt:
R:Al₂O₃ = 0,1 -3
MeO:Al₂O₃ = 0 - 2
P₂O₅:Al₂O₃ = ≧ 1,5 und
H₂O:Al₂O₃ = 40 - 500.

2. Verfahren nach Anspruch 1, bei dem man die verschiedenen Komponenten der Ausgangslösung oder des Ausgangsgels in folgenden Molverhältnissen vorlegt:
R:Al₂O₃ = 0,15 -2
MeO:Al₂O₃ = 0 - 2
P₂O₅:Al₂O₃ = 1,5 -2,5 und
H₂O:Al₂O₃ = 45 - 320.

3. Verfahren nach Anspruch 1 oder 2, bei dem man als Aluminiumquelle ein Aluminiumoxid, Aluminiumhydroxid und/oder Aluminiumalkoxid, insbesondere Aluminiumtriisopropoxid, einsetzt.

4. Verfahren nach einem der Ansprüche 1-3, bei dem man als Phosphorquelle Phosphorsäuren, Phosphoroxide, Phosphate oder Phosphite einsetzt.

5. Verfahren nach einem der Ansprüche 1-4, bei dem man eine wie oben definierte Strukturbildner- oder Templatquelle verwendet, wobei R₁ eine C₈-C₁₂-Kohlenstoffkette und R₂, R₃, R₄ und R₅ jeweils ein Wasserstoffatom oder eine Niederalkylgruppe bedeuten, und bevorzugt verwendet man 1,8-Diaminooctan.

6. Verfahren nach einem der Anprüche 1-5, bei dem man einen MeO-Vorläufer in Form der entsprechenden Chloride, Iodide, Bromide, Sulfate, Nitrate oder Acetate einsetzt.

7. Verfahren nach einem der Ansprüche 1-6, bei dem man die Temperatur unter 200°C, insbesondere im Bereich von 100 bis 200°C und bevorzugt im Bereich von 110 bis 180°C, hält.

8. Verfahren nach einem der Anprüche 1-7, bei dem man die Ausgangslösung oder das Ausgangsgel über einen Zeitraum im Bereich von 6 bis 144 Stunden, insbesondere 24 bis 96 Stunden, unter kristallbildenden Bedingungen hält.

9. Verfahren nach einem der Ansprüche 1-8, bei dem man das erhaltene kristalline Produkt calciniert.

## Revendications

1. Procédé de préparation d'aluminophosphates cristallins à partir d'un gel ou d'une solution de formation comprenant un mélange d'une source d'aluminium, d'une source de phosphore, éventuellement d'une source d'au moins un oxyde de métal, MeO, où Me représente un métal divalent et une source à base d'une diamine de la formule générale
R₂R₃N-R₁―NR₄R₅
dans laquelle R₁ représente une chaîne carbonée en C₈ à C₁₄, qui peut contenir un ou plusieurs substituants inertes et chacun des symboles R₂, R₃, R₄ et R₅ représente un atome d'hydrogène ou un radical alkyle qui peut contenir un ou plusieurs substituants, lequel mélange est maintenu à une température élevée pendant une période qui suffit à produire un aluminophosphate cristallin, opération suivie de la séparation du produit cristallin obtenu et de son séchage, dans laquelle solution ou dans lequel gel, les divers composants sont initialement présents en les rapports molaires suivants :
R:Al₂O₃ = 0,1 - 3
MeO:Al₂O₃: 0 - 2
P₂O₅:Al₂O₃ = ≧ 1,5 et
H₂O:Al₂O₃ = 40 - 500.

2. Procédé suivant la revendication 1, caractérisé en ce que les divers composants s'utilisent en les rapports molaires qui suivent :
R:Al₂O₃ = 0,15 - 2
MeO:Al₂O₃: 0 - 2
P₂O₅:Al₂O₃ = 1,5 - 2,5 et
H₂O:Al₂O₃ = 40 - 320

3. Procédé suivant la revendication 1 ou 2, caractérisé en ce que l'on utilise un alcoolate, un hydroxyde et/ou un oxyde d'aluminium à titre de source d'aluminium, plus particulièrement le triisopropylate d'aluminium.

4. Procédé suivant une ou plusieurs des revendications 1 à 3, caractérisé en ce que l'on utilise des acides du phosphore, des oxydes du phosphore, des phosphates, ou des phosphites à titre de source du phosphore.

5. Procédé suivant une ou plusieurs des revendications 1 à 4, caractérisé en ce que l'on utilise une source de gabarit ou directrice de structure telle que précédemment définie, où R₁ représente une chaîne carbonée en C₈ à C₁₂ et chacun des symboles R₂, R₃, R₄ et R₅ représente un atome d'hydrogène ou un radical alkyle inférieur, la préférence étant donnée à l'utilisation du 1,8-diaminooctane.

6. Procédé suivant une ou plusieurs des revendications 1 à 5, caractérisé en ce que l'on utilise un précurseur de MeO sous la forme des acétates, nitrates, sulfates, bromures, iodures ou chlorures appropriés.

7. Procédé suivant une ou plusieurs des revendications 1 à 6, caractérisé en ce que l'on maintient la température en dessous de 200°C, en particulier dans la plage comprise entre 100 et 200°C, et, de préférence, dans la plage comprise entre 110 et 180°C.

8. Procédé suivant une ou plusieurs des revendications 1 à 7, caractérisé en ce que l'on maintient le gel ou la solution de formation pendant une période comprise entre 6 et 144 heures, plus particulièrement entre 24 et 96 heures, dans des conditions formatrices de cristal.

9. Procédé suivant une ou plusieurs des revendications 1 à 8, caractérisé en ce que l'on calcine le produit cristallin obtenu.
